# EUROPÄISCHE PATENTANMELDUNG

(11) **EP 2 186 595 A1**
(43) Veröffentlichungstag der Anmeldung: **19.05.2010**
(21) Anmeldenummer: 09176307.8
(22) Anmeldetag: 18.11.2009
(51) Int. Cl.: B23K 26/36

(54) **Vorrichtung zur Herstellung von Dünnschichtsolarzellenmodulen**

(30) Priorität: 18.11.2008 DE 102008058310
(71) Anmelder: JENOPTIK Automatisierungstechnik GmbH, 07745 Jena (DE)
(72) Erfinder: Wagner, Uwe, 99423 Weimar (DE); Acker, Stefan, 07646 Waldeck (DE)
(74) Vertreter: Schaller, Renate

(57) **Zusammenfassung**

Vorrichtung zum Randentschichten beschichteter Substrate (6) und Trennen in einzelne Module entlang der entschichteten Randstreifen, bei der ein Laserscanner (2) zum Randentschichten und ein Laserkopf (9) zum Trennen auf gegenüberliegenden Seiten des Substrates (6) angeordnet sind und in Abhängigkeit von der Bearbeitungsrichtung zueinander positionierbar sind sowie in ihrer Bewegung gemeinsam so ansteuerbar sind, dass der Laserscanner (2) dem Laserkopf (9) in Bearbeitungsrichtung jeweils in einem festen Abstand vorgeordnet ist, wobei als Bearbeitungsrichtungen zwei zueinander senkrechte Richtungen, bevorzugt mit jeweils unterschiedlichem Richtungssinn zur Verfügung stehen.

## Beschreibung

Die Erfindung betrifft eine Vorrichtung zur Randentschichtung beschichteter Substrate und zu deren Trennung in einzelne Module entlang den entschichteten Randstreifen, wie sie gattungsgemäß aus der DE 91 06 843 U1 bekannt ist.

Zur Herstellung von Dünnschichtsolarzellenmodulen (Modulen) werden heutzutage überwiegend Glassubstratplatten (Substrate), die in ihren Abmessungen einem Vielfachen der Abmaße eines Moduls entsprechen, z. B. 2,60 m x 2,20 m, beschichtet und strukturiert, bevor sie entlang ihrer Ränder (Streifen, welche die Ränder der aufgetrennten Module bilden) entschichtet und in die einzelnen Module aufgetrennt und verkapselt werden.

Zur Randentschichtung und zum Trennen sind eine Vielzahl von unterschiedlichen Verfahren bekannt, die auf unterschiedlichen Technologien basieren und grundsätzlich innerhalb einer Fertigungslinie zeitlich nacheinander und an unterschiedlichen Bearbeitungsstationen, das heißt mit unterschiedlichen Maschinen oder Vorrichtungen ausgeführt werden.

Das bedeutet einen Investitionsaufwand für zwei verschiedene Bearbeitungsstationen, Raumbedarf für die beiden Bearbeitungsstationen sowie, unabhängig von den Prozesszeiten, die für das Randentschichten und Trennen jeweils nötig sind, Hilfszeiten für Handling- und Justagevorgänge, die an beiden Bearbeitungsstation erforderlich sind.

Eine von derartigen Bearbeitungsstationen abweichende Bearbeitungsstation ist mit einer Vorrichtung gemäß der DE 91 06 843 U1 offenbart.

In der DE 91 06 843 U1 wird von einem Stand der Technik ausgegangen, bei dem in einer Bearbeitungsstation Rohglastafeln in eine Vielzahl von Einzelglasscheiben getrennt werden und in einer weiteren Bearbeitungsstation eine Randentschichtung der Einzelglasscheiben erfolgt.

Als mögliche Verfahren zur Randentschichtung des hier in der DE 91 06 843 U1 dargestellten Standes der Technik sind ein thermisches Verfahren mittels Autogenflamme und mechanische Abtragverfahren mittels Schleif- und Polierscheibe oder Sandstrahlen angegeben.

Es wird als Nachteil erkannt, dass für die beiden Bearbeitungsschritte, Trennen und Randentschichten, zwei separate Bearbeitungsstationen erforderlich sind.

In der DE 91 06 843 U1 wird nun vorgeschlagen, vom bisherigen Prinzip der Randentschichtung der bereits fertig zugeschnittenen Einzelglasscheiben abzugehen und die Rohglastafeln vor dem Aufteilen in die Einzelglasscheiben in den Bereichen zu entschichten, in denen dann auch die Anritz- und Trennlinien für die spätere Trennung liegen (Randstreifen).
Dadurch wird generell der Handhabungsaufwand gegenüber der Randentschichtung von Einzelglasscheiben reduziert. Ferner sei es möglich, sowohl das Anritzen bzw. Schneiden der Einzelglasscheiben als auch die erforderliche Entschichtung in einer einzigen Bearbeitungsstation der Fertigungslinie durchzuführen.

Die Rohglastafel wird in dieser Bearbeitungsstation auf einer horizontalen oder vertikalen Auflagefläche fixiert und die Randstreifen der Einzelglasscheiben werden mit einem Schleifkörper überfahren. Die Rohglastafel kann nach der Entschichtung in den überfahrenen Bereichen unverändert in ihrer Position liegen- bzw. stehen bleiben, um anschließend mit dem Glas-Schneidrädchen denselben Verfahrweg wie beim Abschleifen nachzufahren. Danach erfolgt das Aufbrechen der Einzelglasscheiben. Auf diese Weise ist es möglich, dasselbe Steuerprogramm und dieselbe Bewegungseinrichtung bei lediglich ausgetauschtem Werkzeug zu nutzen, um beide Bearbeitungsverfahren auszuführen.
Eine Vorrichtung gemäß der DE 91 06 843 U1 zum Entschichten und Schneiden weist eine Bearbeitungsbrücke auf, die mit einem Schleif- und/oder austauschbar einem Schneidwerkzeug ausgestattet ist.

Zuerst wird das Schleifwerkzeug vorzugsweise computergesteuert entlang einer vorgegebenen Bewegungsbahn, die durch die Lage der Randbereiche bestimmt ist, gefahren. Ist der Abschleifvorgang beendet, wird vom Schneidwerkzeug anschließend dieselbe Bewegungsbahn entlang der Mittellinie der entschichteten Streifen nachgefahren. Dass das Schleifen und Schneiden auch gleichzeitig durchgeführt werden kann, wird behauptet, aber nicht näher ausgeführt.

Gegenüber einer Bearbeitung in unterschiedlichen Bearbeitungsstationen hat eine Lösung gemäß der DE 91 06 843 U1 den Vorteil eines geringeren Raumbedarfes, eines geringeren Investitionsbedarfes sowie der Erhöhung der Taktzeit durch eine Verkürzung der Hilfszeiten für Handling- und Justagevorgänge.

Eine Verringerung der Taktzeit durch eine Verkürzung der Prozessdauer, indem der Entschichtungsprozess gleichzeitig oder zeitlich überlappend mit dem Trennprozess durchgeführt wird, ist nur möglich, sofern die Bearbeitungsbahnen stets dieselbe konstante Richtung aufweisen und im stets selben Richtungssinn abgefahren werden. Nur dann sind das Schleifwerkzeug und das Ritzwerkzeug, die gemeinsam hintereinander verfahrbar an einer Brücke angeordnet sein können, in der erforderlichen Relativlage zueinander.

Aus der DE 20 2008 005 970 U1 sind ein Verfahren und eine Vorrichtung zum Randentschichten von Dünnschichtsolarmodulen mittels Laserstrahlung bekannt.

Zur Durchführung des Verfahrens wird ein gepulster Laserstrahl von der unbeschichteten Seite des Substrates her auf den zu entschichtenden Randbereich gerichtet. Der Laserstrahl hat einen rechteckförmigen Querschnitt mit relativ scharfen Rändern und gleichförmiger Intensitätsverteilung. In Abhängigkeit von der Wiederholrate der Laserpulse tastet der Laserstrahl mit einer solchen Geschwindigkeit den Randbereich ab, sodass dieser vollständig ohne große Überlappungsverluste vom Laserstrahl beaufschlagt wird. Die dazu erforderliche Relativbewegung zwischen dem Laserstrahl und dem Dünnschichtsolarmodul wird durch die Überlagerung einer Scanbewegung eines Scanners und einer translatorischen Relativbewegung zwischen dem Scanner und dem Dünnschichtsolarmodul entlang der Richtung der Mittellinie des umlaufenden Randes realisiert. Das bei der Randentschichtung entfernte Material wird bei der Freisetzung abgesaugt.

Zur Durchführung dieses Verfahrens wird eine Vorrichtung mit einer ortsfest montierten Laserstation offenbart, die einen Laser, einen Scanner und eine Optik umfasst, die vereint in einem kompakten Gehäuse angeordnet sind. Das Dünnschichtsolarmodul wird seitens der Laserstation von einem Knickarmroboter auf seiner unbeschichteten Seite mittig durch einen Vakuumgreifer gehalten. Der Knickarmroboter wird so angesteuert, dass das Dünnschichtsolarmodul unterhalb der Strahlaustrittsöffnung der Laserstation mit konstanter Geschwindigkeit eine Bahnbewegung ausführt, die der umlaufenden Mittellinie des Randes entspricht. Unterhalb des Dünnschichtsolarmoduls befindet sich innerhalb des Bearbeitungsfeldes in einem relativ kleinen Abstand zum Dünnschichtsolarmodul die trichterförmige Öffnung eines Absaugkanals.

Die in der DE 20 2008 005 970 U1 beschriebene Vorrichtung ist ausschließlich zur Randentschichtung vorgesehen und geeignet.

Zum Trennen eines fertig beschichteten und strukturierten, mit entschichteten Randbereichen versehenen Substrates sind ebenfalls eine Vielzahl von mechanischen und thermischen Verfahren und dazu geeignete Vorrichtungen bekannt.

Bevorzugt kommen Verfahren in Frage, mit denen in einem ersten Arbeitsschritt entlang aller gewünschten Trennlinien ein Tiefenriss erzeugt wird, der dann in einem zweiten Arbeitsschritt vollständig durch das Substrat getrieben wird, um das Substrat in einzelne Module zu zerlegen. Der Tiefenriss kann z. B. mit einem mechanischen Ritzrädchen oder einem Laserstrahl provoziert werden. Laserverfahren, bei denen das Material durch Provokation thermischer Spannungen gespalten wird, beruhen auf dem Prinzip der begrenzten lokalen Aufheizung unterhalb der Erweichungstemperatur des Materials, wodurch Druckspannungen im Material entstehen, und des anschließenden schockartigen Abkühlens mittels eines gerichteten Kühlmittelstrahles, wodurch Zugspannungen generiert werden. Die entstehenden Kräfte im Material führen zu einem Trennriss.

In der WO 96/20062 ist neben einem solchen Laserverfahren auch eine Vorrichtung zur Durchführung eines solchen Verfahrens offenbart.
Die Vorrichtung umfasst einen Bestrahlungsteil mit einem Laser und einem entlang dessen optischer Achse angeordneten Fokussiersystem, einen gegenüber dem Bestrahlungsteil versetzbaren Mechanismus, durch den ein Kältemittel in die Schnittzone gebracht wird, Mittel, mit denen das zu schneidende Material fixiert wird, Mittel zum relativen Versetzen des Lasers und des Kältemittels zum Werkstück sowie eine Steuereinrichtung.

Eine Vielzahl weiterer Publikationen betreffen Verfahren, mit denen die Strahlungsdichteverteilung im Strahlungsfleck oder die Strahlfleckform optimiert werden, um die Qualität und Geschwindigkeit des Trennprozesses zu verbessern. Entsprechend unterscheiden sich die zur Verfahrensdurchführung verwendeten Vorrichtungen im Wesentlichen nur durch unterschiedliche Strahlformungs- bzw. Strahlführungselemente.
Grundsätzlich gemeinsam haben solche Vorrichtungen folgende Merkmale:
- eine Laserstrahlungsquelle, grundsätzlich mit steuerbarer Strahlungsleistung und Strahlungsdauer. In Abhängigkeit vom Laser kann das emittierende Strahlungsbündel neben einer unterschiedlichen Wellenlänge und Strahlungsleistung insbesondere unterschiedliche Strahlungsquerschnittsformen und unterschiedliche Strahlungsdichteverteilungen aufweisen.
- einen Laserkopf, in dem optische Mittel vorhanden sind, um das Laserstrahlungsbündel zur Werkstückoberfläche hin zu fokussieren. Diese optischen Mittel können im Einzelfall zusätzlich einer Strahlformung und Strahlführung bzw. der Änderung einer Strahldichteverteilung dienen.
- Mittel zur relativen Bewegung des Laserkopfes und des Werkstücks entlang einer Trennlinie
- eine Kühlmitteleinrichtung mit einer Kühlmitteldüse, die in Bewegungsrichtung hinter dem Laserkopf in einem veränderbaren oder festen Abstand angebracht ist
- eine Steuereinrichtung, über die unter anderem der Laserkopf und die mit dieser verbundenen Kühlmitteldüse in Richtung der Trennlinie positioniert wird

Aus der DE 10 2005 027 800 A1 ist eine derartige Vorrichtung bekannt, wobei hier als Besonderheit zwei Kühldüsen vorhanden sind, damit Trennrisse in einer Bewegungsrichtung mit wechselndem Richtungssinn erzeugt werden können.

Das TSL-Verfahren ist grundsätzlich nur für spröde Materialen, insbesondere Glassubstrate geeignet, die unbeschichtet sind bzw. in dem Bereich der Trennlinie entschichtet sind. Die Oberfläche des Substrates im Trennbereich sollte frei von Rückständen und unbeschädigt sein, das heißt insbesondere keine Mikrorisse aufweisen.

Zurückkommend auf die DE 91 06 843 U1, die eine Vorrichtung zur Randentschichtung und Trennung von Einzelglasscheiben betrifft und damit den naheliegendsten Stand der Technik zu einer erfindungsgemäßen Vorrichtung darstellt, kann zusammengefasst werden, dass diese Vorrichtung den Nachteil hat, dass das Randentschichten und Trennen in zwei zueinander senkrechte Richtungen (x und y) mit unterschiedlichem Richtungssinn nicht gleichzeitig möglich ist, wodurch die Prozessdauer beider Verfahren zur Taktzeit beiträgt.

Es ist die Aufgabe der Erfindung, eine Vorrichtung zu finden, mit der ein beschichtetes Substrat in unterschiedliche Richtungen und mit unterschiedlichem Richtungssinn gleichzeitig entlang Randstreifen zu bildender Module entschichtet und getrennt werden kann.

Diese Aufgabe wird für eine Vorrichtung mit den Merkmalen des Anspruches 1 gelöst.
Vorteilhafte Weiterbildungen sind in den Unteransprüchen beschrieben.

Es ist erfindungswesentlich, dass die Vorrichtung zum Randentschichten und Trennen Werkzeuge aufweist, die von den entgegengesetzten Seiten auf das Substrat einwirken können. Dadurch behindern sich die Werkzeuge, die nahe nebeneinander auf das Substrat einwirken sollen, nicht.
Außerdem kann die Relativlage dieser Werkzeuge zueinander voneinander unabhängig, und ohne dass sie sich im Wege sind, immer so verändert werden, dass das Werkzeug zum Trennen stets dem Werkzeug zum Randentschichten in Bewegungsrichtung nachgeordnet ist.
Als Werkzeuge im weitesten Sinne werden hier zum Trennen ein Laserkopf verstanden, der einen von einer ersten Laserstrahlquelle kommenden ersten Laserstrahl auf das Substrat richtet, und zum Entschichten ein Laserscanner, der einen von einer zweiten Laserstrahlquelle herkommenden zweiten Laserstrahl ebenfalls auf das Substrat richtet.

Erfindungsgemäß wird zum Randentschichten der zweite Laserstrahl über einen Laserscanner auf die unbeschichtete Seite des beschichteten Substrates gerichtet. Dabei führt der Scanner eine Scanbewegung aus, mit der der erste Laserstrahl mit einem vorgegebenen Scanwinkel senkrecht zur Mittellinie des zu entschichtenden Randstreifens das Substrat mit Laserstrahlung beaufschlagt. Die Breite des entstehenden Randstreifens wird dabei vom Scanwinkel und der Entfernung des Laserscanners vom Substrat bestimmt.

Die Relativbewegung zwischen dem zweiten Laserstrahl und dem Substrat in Richtung der Mittellinie des Randstreifens wird in x-Richtung durch eine Linearbewegung des Substrates selbst realisiert, welches auf einer Transportauflage aufliegt, und in y- Richtung durch Verschieben des Laserscanners.
Als zweite Laserstrahlquelle zum Randentschichten wird bevorzugt ein Nd:YAG-Laser verwendet.

Zum Einbringen eines Trennrisses entlang der Mittellinie eines Randstreifes wird der erste Laserstrahl über einen Laserkopf seitens der beschichteten Seite auf das Substrat gerichtet. Als erste Laserstrahlquelle wird hierfür bevorzugt ein CO₂-Laser eingesetzt.
Auch zum Trennen wird die Relativbewegung in Richtung des Trennrisses entlang der Mittellinie des Randstreifens in x-Richtung durch eine Linearbewegung des Substrates selbst realisiert, welches auf einer Transportauflage aufliegt, und in y-Richtung durch Verschieben des Laserkopfes.

Der Laserscanner und der Laserkopf sind an zwei zueinander parallel ausgerichteten Brücken in y-Richtung verschiebbar angeordnet, wobei wenigstens die obere Brücke, welche den Laserkopf trägt, fest angeordnet ist. Die untere Brücke, welche den Laserscanner trägt, kann entweder in verschiedene, bevorzugt drei Positionen parallel zur oberen Brücke in x-Richtung verstellbar sein, oder sie ist ortsfest angeordnet, bevorzugt mit der oberen Brücke fest verbunden, wobei an ihr bevorzugt ein Kreuzschlitten geführt ist, mit dem der Laserscanner zusätzlich zur Verschiebung in y-Richtung in verschiedene Positionen in x-Richtung geschoben werden kann.

Damit die bei der Randentschichtung entstehenden Abprodukte entfernt werden können, ist eine Absaugeinrichtung mit wenigstens einem Absaugtrichter vorhanden, der in einem vorgegebenen Abstand zum Laserkopf angeordnet ist. Anhand der Zeichnung wird die Vorrichtung im Folgenden beispielhaft anhand von drei Ausführungsbeispielen näher erläutert.

Es zeigen:
Fig. 1a eine Prinzipskizze einer ersten Ausführung einer Vorrichtung in Draufsicht
Fig. 1b eine Prinzipskizze der Vorrichtung gemäß Fig. 1a in Seitenansicht
Fig. 2a eine Prinzipskizze einer zweiten Ausführung einer Vorrichtung in Draufsicht
Fig. 2b eine Prinzipskizze einer Vorrichtung gemäß Fig. 2a in Seitenansicht
Fig. 3a eine Prinzipskizze einer dritten Ausführung einer Vorrichtung in Draufsicht
Fig. 3b eine Prinzipskizze einer Vorrichtung gemäß Fig. 3a in Seitenansicht

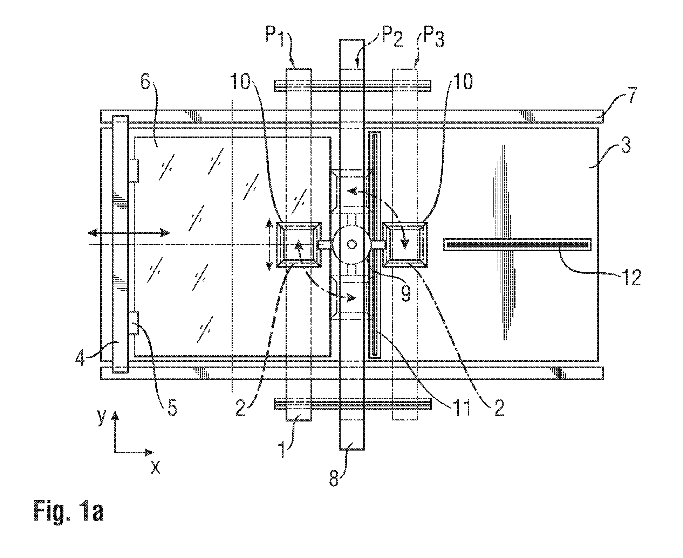

In den Fig. 1a a und 1b ist eine erste vorteilhafte Ausführung einer erfindungsgemäßen Vorrichtung dargestellt.
Die Vorrichtung umfasst eine in y-Richtung eines gezeigten kartesischen Koordinatensystems ausgerichtete untere Brücke 1, auf der ein Laserscanner 2 in y-Richtung verschiebbar angeordnet ist.
Oberhalb der unteren Brücke 1 ist eine Transporteinrichtung mit einer Transportauflage 3 und einer Zuführbrücke 4 mit Greifeinheiten 5 vorhanden.
Die Transportauflage 3 weist in dem Auflagebereich für das Substrat 6 Ausnehmungen auf, die mit der Anordnung und Breite der Randstreifen korrespondieren und zur oberen Brücke 8 ausgerichtet sind, damit ein vom Laserscanner 2 kommender zweiter Laserstrahl ungehindert auf das Substrat 6 auftreffen kann.
Auf der Transportauflage 3 liegt ein zu bearbeitendes, fertig beschichtetes und strukturiertes Substrat 6 (Nutzen) auf, welches durch wenigstens zwei der Greifeinheiten 5 in Position gehalten wird. Gemeinsam mit der Zuführbrücke 4, die entlang einer Linearführung 7 parallel zur unteren Brücke 1 verschoben werden kann, wird die Transportauflage 3 bewegt und transportiert so das Substrat 6 in x-Richtung horizontal, oberhalb der unteren Brücke 1.
Oberhalb der Transporteinrichtung ist mittig eine obere Brücke 8, in gleicher Richtung wie die untere Brücke 1 ausgerichtet, angeordnet. An der oberen Brücke 8 ist ein um 90° schwenkbarer, jeweils in seinen Endlagen fixierbarer Laserkopf 9 montiert. Mit dem Laserkopf 9 sind zwei Absaugtrichter 10 eines nicht dargestellten Absaugsystems diametral gegenüberliegend fest verbunden, sodass sie in den beiden Endlagen des Laserkopfes 9 entweder in x- oder y-Richtung mit dem Laserkopf 9 auf einer Linie liegen. Die Öffnungen der Absaugtrichter 10 befinden sich dabei möglichst nah über dem aufliegenden Substrat 6, damit die bei der Randentschichtung entstehenden Abprodukte vollständig abgesaugt werden können. Zwischen dem Laserkopf 9 und den Absaugtrichtern 10 sind jeweils Kühldüsen vorhanden, auf deren Darstellung in den Zeichnungen der Übersichtlichkeit halber verzichtet wurde.
In der Zeichnung dargestellt sind ein erstes Brechschwert 11 und ein zweites Brechschwert 12, die zum abschließenden Vereinzeln der Module durch gezieltes Anheben die Trennlinien in y- bzw. in x-Richtung mit einer Kraft F von unten her beaufschlagen.
Nicht in den Zeichnungen dargestellt sind die beiden Laserstrahlquellen und die jeweiligen Laserstrahlzuführungen zum Laserscanner 2 bzw. zum Laserkopf 9. Ebenfalls wurde auf eine Darstellung der Antriebe und der Steuereinheit zum motorischen Verschieben des Laserkopfes 9 und des Laserscanners 2 sowie für die Transporteinrichtung verzichtet.

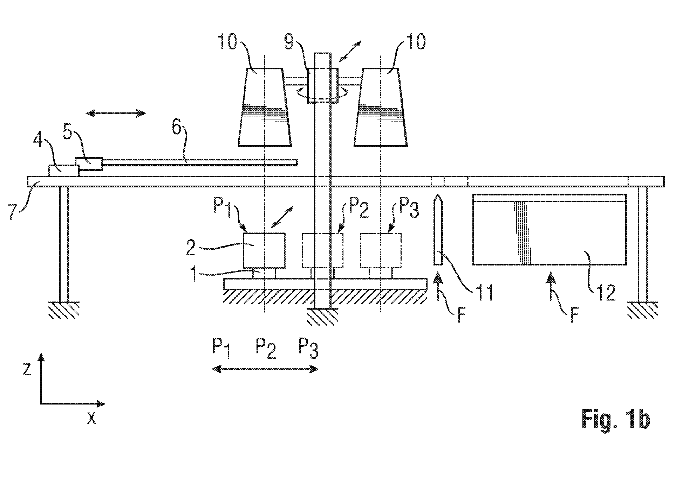

Die Funktionsweise der in den Fig. 1a und 1b dargestellten ersten Ausführung einer Vorrichtung soll nachfolgend beschrieben werden.
Hierzu soll beispielsweise ein Substrat 6 gemäß Fig. 4 in vier gleich große Module zerlegt werden. Entsprechend werden drei Randstreifen in x- und drei Randstreifen in y-Richtung entschichtet, die jeweils eine gleiche Breite aufweisen.
Entlang der Mittellinien der Randstreifen werden gleichzeitig mit dem Entschichten, der Entschichtung unmittelbar nachlaufend Trennrisse eingebracht.
Erst nachdem alle Trennrisse eingebracht wurden, wird das Substrat 6 entlang der Trennrisse durch die Einwirkung der Brechschwerter 11 und 12 gebrochen. Anstelle alle Randstreifen mit gleicher Breite auszuführen, könnten auch die umlaufenden Randbereiche nur halb so breit ausgeführt werden, wenn ein umlaufender Trennschnitt nicht erforderlich ist, sondern die Kanten des Substrats 6 auch als Kanten der Module genutzt werden sollen. Die Breite der Randstreifen kann einfach über die Änderung des Scanwinkels variiert werden.

Um ein in Fig. 4 dargestelltes Substrat 6 mit einer Vorrichtung gemäß der ersten Ausführung zu bearbeiten, wird dieses auf die Transportauflagefläche 3 in einer Position aufgelegt, wie sie in Fig. 1 dargestellt ist.
Das Substrat 6 wird von den Greifeinheiten 5 fixiert und mit einer Kante parallel zur oberen Brücke 8 ausgerichtet.
Bei der in Fig. 1a und 1b gezeigten Stellung des Laserkopfes 9, der sich mittig an der feststehenden oberen Brücke 8 befindet, und einer Stellung der unteren Brücke 1, parallel zur oberen Brücke 8 um einen vorgegebenen Abstand versetzt, in Position P1, wobei sich der Laserscanner 2 ebenfalls mittig an der unteren Brücke 1 befindet, kann die Entschichtung eines Randstreifens in x-Richtung über die Mitte des Substrates 6 erfolgen.
Der Laserscanner 2 und der Laserkopf 9 liegen in Bewegungsrichtung hintereinander, und oberhalb des Laserscanners 2 ist ein Absaugtrichter 10 positioniert.
Vorteilhaft bildet der Querschnitt des ersten Laserstrahls eine langgestreckte, schmale Ellipse in Bewegungsrichtung, was dem Fachmann aus einer Vielzahl von Verfahren auf der Basis des Thermischen-Laserstrahl-Separierens bekannt ist.
Um den mittigen Randstreifen zu entschichten und den mittigen Trennriss einzubringen, wird nun bei ortsfestem Laserscanner 2 und ortsfestem Laserkopf 9 das Substrat 6 zwischen den beiden Brücken 1, 8 hindurch in positive x-Richtung verschoben, womit eine Bearbeitung in negativer x-Richtung erfolgt.
Der Prozess des Entschichtens und Einbringens eines Trennrisses erfolgt, wie aus dem Stand der Technik bekannt. Ein Verfahren zum Entschichten mittels Laserstrahl ist beispielsweise aus der DE 20 2008 005 970 U1 bekannt und ein Verfahren zum Einbringen eines Trennrisses mittels Laserstrahl aus der WO 96/20062.

Eine weitere Bearbeitung in negativer x-Richtung kann erfolgen bei gleicher Relativlage von Laserscanner 2 und Laserkopf 9, wenn beide jeweils um einen gleichen Weg an den Brücken 1, 8 in y- Richtung verschoben werden, was durch eine gemeinsame Ansteuerung jeweils zugehöriger Antriebe erfolgt. Dazu sind an den Brücken 1, 8 Führungsschienen vorhanden, auf denen Schlitten 14, 15 geführt sind, auf denen der Laserkopf 9 bzw. der Laserscanner 2 befestigt sind.
Das Substrat 6 muss zuvor in seine Ausgangsposition zurück transportiert werden.

Die Bearbeitung kann auch im entgegengesetzten Richtungssinn, also in positiver x-Richtung erfolgen, wodurch die Hilfszeit zum Transport des Substrates 6 in seine Ausgangsposition entfällt. In diesem Fall muss die untere Bücke in die Position 3, parallel zur oberen Brücke 8 um den vorgegebenen Abstand versetzt, verschoben werden, wodurch der Laserscanner 2 in Bearbeitungsrichtung vor dem Laserkopf 9 positioniert wird. In dieser Position ist dann der andere Absaugtrichter 10 über dem Laserscanner 2 angeordnet.

Zur Bearbeitung in y-Richtung wird der Laserkopf 9 um 90° gedreht.
Damit wird zum einen der elliptische Strahlfleck in Bearbeitungsrichtung ausgerichtet und zum anderen die beiden Absaugtrichter 10 hintereinander in Bearbeitungsrichtung gestellt.
Die untere Brücke 1 wird jetzt in Position P2 genau unterhalb der oberen Brücke 8 verschoben. Je nachdem, ob als Bearbeitungsrichtung die positive oder negative y-Richtung gewählt wird, ist der Laserscanner 2 um den vorgegebenen Abstand vor oder hinter dem Laserkopf 9 anzuordnen.
Für die Bearbeitung in y-Richtung wird das Substrat 6 ortsfest gehalten und der Laserscanner 2 wird, gefolgt vom Laserkopf 9, in y-Richtung verschoben.

Nachdem die Randstreifen vollständig entschichtet und geritzt sind, wird das Substrat 6 jeweils über eines der Brechschwerter 11, 12 transportiert. Nacheinander werden die Trennrisse in y-Richtung über das erste Brechschwert 11 gefahren, welches beim Anheben das Substrat 6 aushebt, bis das Substrat 6 entlang dem Trennriss bricht.
Die Trennrisse in x-Richtung werden gebrochen, indem das zweite Brechschwert 12 in y-Richtung verschoben wird und nacheinander unter den Trennrissen angehoben wird.
Entlang der Trennrisse sind wenigstens über die Breite des entschichteten Randes in der Transportauflage 3 Aussparungen vorgesehen. Zum einen sind diese erforderlich, damit der Laserstrahl vom Laserscanner 2 kommend ungehindert in das Substrat 6 eindringen kann und zum anderen werden durch sie hindurch die Brechschwerter 11, 12 angehoben. Die Aussparungen in der Transportauflage 3 kommen damit dem Entschichten und dem Brechen zugute.

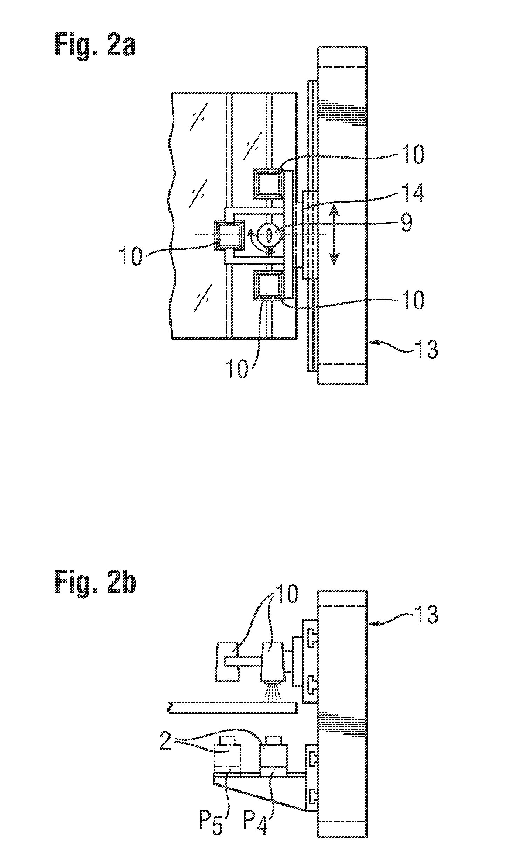

In den Fig. 2a und 2b ist eine zweite vorteilhafte Ausführung einer erfindungsgemäßen Vorrichtung dargestellt. Im Unterschied zur ersten Ausführung ist hier die untere Brücke 1 mit der oberen Brücke 8 fest verbunden und bildet mit dieser einen Rahmen 13.
An dem an der oberen Brücke 8 geführten oberen Schlitten 14 sind drei Absaugtrichter 10 mit einem gleichen Abstand zu einem Laserkopf 9, der am oberen Schlitten 14 um 90° schwenkbar angeordnet ist, fixiert. Damit bleiben die Absaugtrichter 10 im Unterschied zur ersten Ausführung stets in unveränderter Position gegenüber dem oberen Schlitten 14.

Der Laserscanner 2 sitzt im Unterschied zur ersten Ausführung einer erfindungsgemäßen Vorrichtung nicht auf einem einfachen unteren Schlitten 15, der an der unteren Brücke 1 in y-Richtung geführt wird, sondern auf einem Kreuzschlitten 16, wodurch er zusätzlich zur y-Richtung in x-Richtung in zwei Positionen P4 und P5 verschiebbar ist.
So kann der Laserscanner 2 wahlweise unter einem der drei Absaugtrichter 10 positioniert werden, um das Substrat 6 in x-Richtung in einem Richtungssinn und in y- Richtung mit unterschiedlichem Richtungssinn bearbeiten zu können. Vorteilhaft an dieser Ausführung ist, dass die Absaugtrichter 10 bei der Richtungsänderung nicht mit dem Laserkopf 9 gedreht werden müssen, wodurch die notwendigen Verbindungen innerhalb der Absaugeinrichtungen einfacher ausgeführt werden können.
Außerdem kann auf die Führung für eine verschiebbare untere Brücke 1, wie sie für die erste Ausführung erforderlich ist, verzichtet werden und ein notwendiger motorischer Antrieb für die untere Brücke 1 durch einen wesentlich geringer dimensionierten Antrieb für die x-Achse des Kreuzschlittens 16 ersetzt werden.

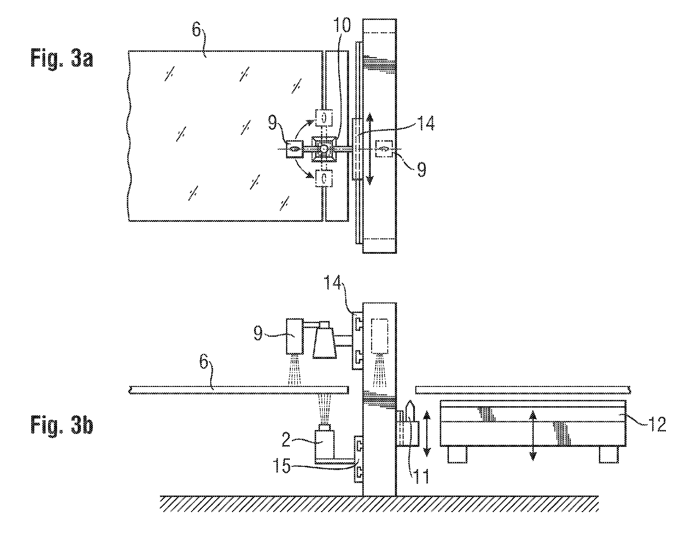

In den Fig. 3a und 3b ist eine dritte Ausführung für eine erfindungsgemäße Vorrichtung aufgezeigt.

Hier ist der Laserscanner 2 auf einem unteren Schlitten 15 montiert, der an der unteren Brücke 1, die hier ebenfalls fest stehend ausgeführt ist, in y-Richtung verschoben werden kann. In x-Richtung ist der Laserscanner 2 unbeweglich.
Am oberen Schlitten 14 ist ein einzelner Absaugtrichter 10 fest montiert, um den ein Laserkopf 9 in einem festen Abstand um 180° schwenkbar angeordnet ist. Gleich der zweiten Ausführungsform kann das Substrat 6 in x-Richtung in einem Richtungssinn und in y- Richtung mit unterschiedlichem Richtungssinn bearbeitet werden.
Indem in die obere Brücke 8 ein zusätzlicher Laserkopf 9 integriert wird, könnte auch eine Bearbeitung in x-Richtung mit unterschiedlichem Richtungssinn ermöglicht werden.

Eine erfindungsgemäße Vorrichtung ermöglicht das Randentschichten, das Einbringen von Trennrissen und das Brechen mit nur einer Vorrichtung.

### Bezugszeichenliste

- 1: untere Brücke
- 2: Laserscanner
- 3: Transportauflage
- 4: Zuführbrücke
- 5: Greifeinheit
- 6: Substrat
- 7: Linearführung
- 8: obere Brücke
- 9: Laserkopf
- 10: Absaugtrichter
- 11: erstes Brechschwert
- 12: zweites Brechschwert
- 13: Rahmen
- 14: oberer Schlitten
- 15: unterer Schlitten
- 16: Kreuzschlitten

## Patentansprüche

1. Vorrichtung zum Randentschichten beschichteter Substrate (6) und Trennen in einzelne Module entlang der entschichteten Randstreifen mit einer ortsfesten oberen Brücke (8) und einer sich darunter befindenden Auflage, auf der das Substrat (6), zu der oberen Brücke (8) ausgerichtet, aufgelegt wird, wobei an der oberen Brücke (8) ein Werkzeug in y-Richtung, an einem oberen Schlitten (14) montiert, verschiebbar angeordnet ist, sowie wenigstens einem Antrieb und einer mit dem Antrieb verbundenen Steuereinheit,
**dadurch gekennzeichnet,**
**dass** das Werkzeug ein Laserkopf (9) ist, der einen ersten Laserstrahl von oben auf das Substrat (6) richtet, und wenigstens ein Absaugtrichter (10) einer Absaugeinheit in einem festen vorgegebenen Abstand benachbart zum Laserkopf (9) vorhanden ist,
**dass** unterhalb der Auflage eine untere Brücke (1) parallel zur oberen Brücke (8) ausgerichtet vorgesehen ist, an der ein Laserscanner (2) in y-Richtung verschiebbar unter einem Absaugtrichter (10) angeordnet ist,
**dass** die Auflage eine Transportauflage (3) ist, auf der das Substrat (6) in x-Richtung transportiert werden kann und
**dass** in der Transportauflage (3) Aussparungen vorgesehen sind, die mit den Randstreifen korrespondieren, damit ein vom Laserscanner (2) kommender zweiter Laserstrahl ungehindert auf das Substrat (6) von unten auftreffen kann.

2. Vorrichtung nach Anspruch 1, **dadurch gekennzeichnet,**
**dass** der Laserkopf (9) um 90° schwenkbar ist und an ihm diametral gegenüberliegend zwei Absaugtrichter (10) befestigt sind und
**dass** die untere Brücke (1) zur oberen Brücke (8) um den vorgegebenen Abstand in x-Richtung mit verschiedenem Richtungssinn verschiebbar ist, damit der Laserscanner (2) zum Laserkopf (9) in x-Richtung um den vorgegebenen Abstand versetzt angeordnet werden kann.

3. Vorrichtung nach Anspruch 1, **dadurch gekennzeichnet,**
**dass** der Laserkopf (9) um 90° schwenkbar angeordnet ist,
**dass** drei Absaugtrichter (10) mit dem vorgegebenen Abstand zum Laserkopf (9) am oberen Schlitten (14) befestigt sind,
**dass** die untere Brücke (1) ortsfest ist und mit der oberen Brücke (8) einen Rahmen (13) bildet, wobei an der unteren Brücke (1) der Laserscanner (2) auf einem Kreuzschlitten (16) montiert ist, um ihn zum Laserkopf (9) in x-Richtung versetzt anzuordnen.

4. Vorrichtung nach Anspruch 1, **dadurch gekennzeichnet,**
**dass** ein Absaugtrichter (10) fest an dem oberen Schlitten (14) montiert ist und ein Laserkopf (9) in dem vorgegebenen Abstand um 180° um den Absaugtrichter (10) schwenkbar angeordnet ist und
**dass** der Laserscanner (2) auf einem unteren Schlitten (15) nur in x-Richtung verschiebbar montiert ist.

5. Vorrichtung nach Anspruch 1 **dadurch gekennzeichnet,**
**dass** parallel zur oberen Brücke (8) ein vertikal bewegliches erstes Brechschwert (11) und hierzu rechtwinklig angeordnet ein vertikal bewegliches und in y-Richtung verschiebbares zweites Brechschwert (12) vorhanden ist, um das Substrat (6) entlang der gebildeten Trennrisse zu brechen.

6. Vorrichtung nach Anspruch 1, **dadurch gekennzeichnet,**
**dass** die Antriebe für die einzelnen Bewegungen mit einer gemeinsamen Steuerung verbunden sind.
